# EUROPÄISCHE PATENTANMELDUNG

(11) **EP 1 431 651 A1**
(43) Veröffentlichungstag der Anmeldung: **23.06.2004**
(21) Anmeldenummer: 03090389.2
(22) Anmeldetag: 18.11.2003
(51) Int. Cl.: F16L 59/18, F16L 21/02

(54) **Rohrverbindung**

(30) Priorität: 20.12.2002 DE 10261851
(71) Anmelder: Mapress GmbH & Co. KG, 40764 Langenfeld (DE)
(72) Erfinder: Speckemeyer, Jens, 45475 Mülheim (DE)
(74) Vertreter: Meissner, Peter E., Dipl.-Ing.

(57) **Zusammenfassung**

Die Erfindung betrifft eine Rohrverbindung, bestehend aus einem Fitting, in den ein Leitungsrohr ein- oder auf den ein Leitungsrohr aufschiebbar und axial sicherbar ist und der im Einschub- oder Aufschubbereich mit einem Dichtelement versehen ist. Dabei ist das Leitungsrohr ein Sandwichrohr (1), dessen Innen- und Außendurchmesser dem Innen- und Außendurchmesser des Fittings (5, 11) entsprechen und dessen Endbereich (19, 20) komplementär zur Kontur des Endbereichs (17, 18) des Fittings (5, 11) zum Ein- oder Aufschieben anpassbar ist.

## Beschreibung

Die Erfindung betrifft eine Rohrverbindung gemäß dem Oberbegriff des Patentanspruches 1.

Eine gattungsgemäße Rohrverbindung ist aus der DE 195 36 598 bekannt. Hierin wird eine Rohrverbindung mit einem Rohr dargestellt, dessen Endabschnitt auf einen metallischen Fitting aufgeschoben ist. Der Fitting ist im Aufschubbereich mit einer einen Dichtring aufnehmenden Ausnehmung versehen. Das Rohr wird bis zu einem außen an dem Fitting befindlichen axialen Anschlag aufgeschoben und im Aufschubbereich durch Verpressung im Dichtbereich und des unmittelbar angrenzenden Bereiches mit dem Fitting gedichtet und axial gesichert.

Aus der US 1321652 ist ebenfalls eine gattungsgemäße Rohrverbindung bekannt, bei der der Fitting über die Rohrenden aufgeschoben wird. An den einschubseitigen Enden des Fittings sind Auswölbungen angebracht, welche einen Dichtring aufnehmen. Zur Herstellung einer dichten und axial gesicherten Rohrverbindung werden die Rohrenden in den Fitting eingeschoben und die den Dichtring enthaltende Ausnehmung mit dem Rohr verpresst.

Die nach dem Stand der Technik bekannten Rohrverbindungen mit Fitting und Leitungsrohr haben jedoch den Nachteil, dass die Rohrverbindung entweder im Falle eines Innenfittings den freien Innendurchmesser der Rohrleitung einengt oder im Falle eines Außenfittings den Außendurchmesser vergrößert.

Rohrverbindungen die keine Querschnittseinengung oder -vergrößerung aufweisen sind ebenfalls bekannt (Mannesmann OCTG,1987, Casing (Must); Tubing (ST/A/C)). Diese Rohrverbindung wird jedoch ohne Fitting hergestellt. Dazu wird an den zu verbindenden Rohrenden beispielsweise jeweils ein Außen- und dazu passendes Innengewinde angebracht und die Rohre miteinander verschraubt.

Die Durchmessereinengung bei einer Rohrverbindung mit einem Innenfitting ist von Nachteil, weil dadurch die gleichmäßige laminare Strömung des Mediums im Leitungsrohr gestört wird und Turbulenzen auftreten, die Druckverluste im Rohr verursachen.

Bei Rohrverbindungen mit einem Außenfitting nach dem Stand der Technik, wird zwar ein gleichmäßiger Innendurchmesser realisiert, hierbei ist jedoch von Nachteil, dass der Außendurchmesser im Bereich der Rohrverbindung vergrößert ist, so dass eine durchgehende Isolierung nur mit höherem Aufwand qualitativ einwandfrei herzustellen ist.

Aufgabe der Erfindung ist es deshalb, eine Rohrverbindung der gattungsgemäßen Art anzugeben, mit der in einfacher Weise eine Querschnittseinengung oder Querschnittsvergrößerung im Bereich der Rohrverbindung vermieden wird.

Diese Aufgabe wird nach dem Oberbegriff in Verbindung mit den kennzeichnenden Merkmalen des Anspruchs 1 gelöst. Vorteilhafte Weiterbildungen sind Gegenstand von Unteransprüchen.

Nach der Lehre der Erfindung wird zur Lösung dieser Aufgabe ein Sandwichrohr verwendet, dessen Innendurchmesser und Außendurchmesser denjenigen des Fittings entsprechen, wobei zur Herstellung der erfindungsgemäßen Rohrverbindung das Sandwichrohr im Einschub- bzw. Aufschubbereich dem Fitting so angepasst sein muss, dass es auf- oder einschiebbar ist.

Das Sandwichrohr besteht aus einem dünnwandigen vorzugsweise metallischen Außenrohr (z. B. < 0,2 mm) und einem dünnwandigen vorzugsweise metallischen Innenrohr (z. B. < 0,2 mm), die mit einem zusammenpressbaren Füllmittel miteinander stoffschlüssig verbunden sind. Bei besonderen Anforderungen hinsichtlich der Korrosionsbeständigkeit kann als Rohrwerkstoff auch Kunststoff eingesetzt werden. Als Füllmittel kommt vorzugsweise Metallschaum oder Polymerschaum in Betracht, es können jedoch auch andere Füllmittel je nach Anforderungen in Frage kommen.

Ausgeschäumte Hohlprofile sind aus der DE 198 32 794 bekannt. Beschrieben wird hierin ein Verfahren zur Herstellung eines mit Metallschaum ausgeschäumten Hohlprofils sowie eine Strangpresse zur Herstellung eines solchen Hohlprofils.

Im Falle eines Innenfittings wird der Innendurchmesser des Sandwichrohres im Aufschubbereich durch Annäherung des Innenrohrs an das Außenrohr (d. h. durch Zusammenpressen des Füllmittels) aufgeweitet.

Soll ein Außenfitting verwendet werden, wird der Außendurchmesser des Sandwichrohres im Einschubbereich durch Annäherung des Außenrohrs an das Innenrohr entsprechend reduziert. Eventuell ist hierbei zur Stützung des Innenrohres eine Innenstützhülse im Sandwichrohr vorzusehen.

Der Außen- bzw. Innendurchmesser des Sandwichrohres wird im Einschub- bzw. Aufschubbereich in der Weise der komplementär ausgebildeten Kontur des Fittings angepasst, dass nach dem Ein- bzw. Aufschieben die Außen- und Innenwandungen von Rohr und Fitting jeweils fluchten.

Zum besseren Ein- oder Aufschieben des Sandwichrohres können nach einem weiteren Merkmal der Ein- oder Aufschubbereich des Fittings abgeschrägt oder angefast sein, vorzugsweise ist die Anschrägung konvex gekrümmt.

Zur Vermeidung von Spaltkorrosion weist nach einem weiteren Merkmal der Ein- oder Aufschubbereich zwischen Innenfitting und Sandwichrohr vorteilhaft im montierten Zustand einen sich radial nach innen vergrößernden Spalt auf.

Die Dichtfunktion wird über ein Dichtelement vorzugsweise einen Dichtring erzielt, der im Anschluss an die Abrundung oder Fase im Ein- oder Aufschubbereich des Fittings in einer Ausnehmung angeordnet ist und beim Ein- oder Aufschieben des Sandwichrohres komprimiert wird und dadurch abdichtet.

Vorteilhaft ist zur Vermeidung einer Beschädigung des Dichtelementes beim Ein- oder Aufschieben des Sandwichrohres das ein- oder aufschubseitige Ende des Sandwichrohres bei Verwendung eines Innenfittings im Innendurchmesser geringfügig vergrößert und bei Verwendung eines Außenfitting geringfügig verringert, so dass sich Sandwichrohr und Dichtring beim Ein- bzw. Aufschieben nicht berühren.

Im Falle eines Außenfittings muss bei der Auswahl des Füllmittels für das Sandwichrohr zusätzlich sichergestellt werden, dass die Dichtheit des Füllmittels in den zusammengedrückten Rohrlagen gewährleistet ist, da das zu transportierende Medium in diesem Fall in den Spalt der zusammengedrückten Rohrlagen eindringen kann.

Zur Sicherstellung einer einwandfreien Rohrverbindung ist der Fitting erfindungsgemäß mit einem axialen Anschlag versehen, bis zu dem das Sandwichrohr ein- oder aufgeschoben werden muss.

Die axiale Sicherung der Rohrverbindung nach dem Ein- oder Aufschieben des Fittings wird nach einem weiteren Merkmal dadurch erreicht, dass der Fitting am ein- bzw. aufschubseitigen Ende eine Nut aufweist, in welche das Ende des Sandwichrohres formschlüssig eingeformt wird.

Zur Verbesserung der Torsionsfestigkeit der Rohrverbindung wird bei einer weiteren Ausführungsform die Nut an der stimseitigen Kontaktfläche mit dem hierin eingeformten Rohrende mit einer zur Verklammerung geeigneten Oberflächenstruktur versehen. Diese Oberflächenstruktur kann auf verschiedene Weise ausgebildet sein. Denkbar sind z. B. zahnartige Ausbildungen oder sehr rauhe Oberflächen.

Zur Verbesserung der Montagesicherheit ist nach einem weiteren Merkmal die Rohrverbindung mit einer Ausziehsicherung versehen. Dazu ist im Einschub- bzw. Aufschubbereich des Fittings ein Absatz eingeprägt, in den ein im Sandwichrohr komplementär eingeprägter Absatz nach dem Ein- oder Aufschieben formschlüssig einrastet. Durch diese Ausziehsicherung soll verhindert werden, dass sich Rohr und Fitting vor dem axialen Sichem unbeabsichtigt wieder lösen.

Ein wesentlicher Vorteil der erfindungsgemäßen Rohrverbindung liegt darin, dass die Rohrverbindung mit geringem Aufwand und Materialverlust wieder lösbar ist. Hierzu wird mit einem handelsüblichen Rohrschneider das Sandwichrohr kurz vor der Stelle des zur axialen Sicherung eingeformten Rohrendes durchtrennt. Der Längenveriust des Sandwichrohres ist sehr gering und der Fitting kann ebenfalls wieder verwendet werden.

Weitere Merkmale, Vorteile und Einzelheiten der Erfindung ergeben sich aus der nachfolgenden Beschreibung.

Es zeigen:
- **Figur 1**: Längsschnitt durch ein Sandwichrohr,
- **Figur 2**: halbseitiger Längsschnitt durch eine Rohrverbindung mit Innenfitting,
- **Figur 3**: halbseitiger Längsschnitt durch eine Rohrverbindung mit Außenfitting,
- **Figur 4**: halbseitiger Längsschnitt durch eine Rohrverbindung mit Fitting und Ausziehsicherung.

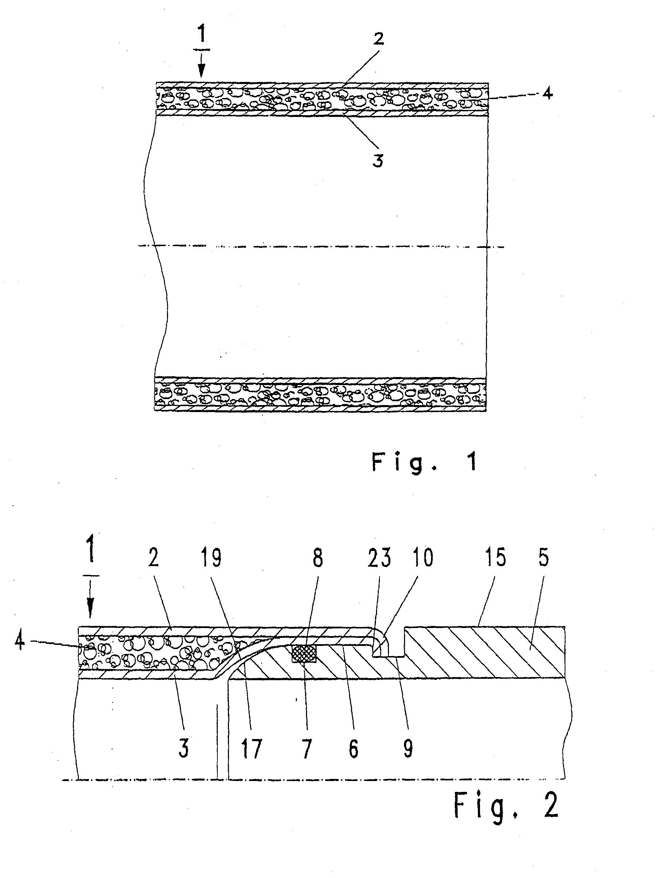

**Figur 1** zeigt einen Längsschnitt durch ein Sandwichrohr 1. Das Sandwichrohr 1 besteht aus einem dünnwandigen vorzugsweise metallischen Außenrohr 2 und einem mit einem zusammenpressbaren Füllmittel 4 verbundenen dünnwandigen vorzugsweise metallischen Innenrohr 3.

In **Figur 2** ist ein halbseitiger Längsschnitt durch eine erfindungsgemäße erste Ausführungsform einer Rohrverbindung dargestellt. Sie besteht aus einem Innenfitting 5, der im Aufschubbereich stirnseitig zum leichteren Einschieben eine Anschrägung 17 aufweist. In diesem Ausführungsbeispiel ist die Anschrägung 17 konvex gekrümmt.

Am einschubseitigen Ende der Anschrägung 17 schließt sich ein erster zylindrisch ausgebildeter Abschnitt 6 an, an dessen Beginn eine ein Dichtelement 8 aufnehmende Ausnehmung 7 vorgesehen ist. An den zylindrisch ausgebildeten Abschnitt 6 schließt sich eine einen Anschlag bildende Nut 9 an, die in einen zweiten zylindrisch ausgebildeten Abschnitt 15 mit größerem Außendurchmesser übergeht.

Zur Vermeidung von Spaltkorrosion ist das Sandwichrohr 1 im Aufschubbereich dem einschubseitigen Endbereich des Innenfittings 5 mit einer Kontur 19 so angenähert, dass ausgehend von der Ausnehmung 7 ein sich radial nach innen vergrößernder Spalt entsteht.

Beim Aufschieben des Sandwichrohres 1 auf den Innenfitting 5 wird das mit Übermaß gefertigte Dichtelement 8 komprimiert und das Ende des Sandwichrohres 1 kommt an der einen Anschlag bildenden Nut 9 zur Anlage. Zur axialen Sicherung wird der Endbereich des Sandwichrohres 1 in die Nut 9 des Fittings 5 eingeformt und bildet einen Kragen 10.

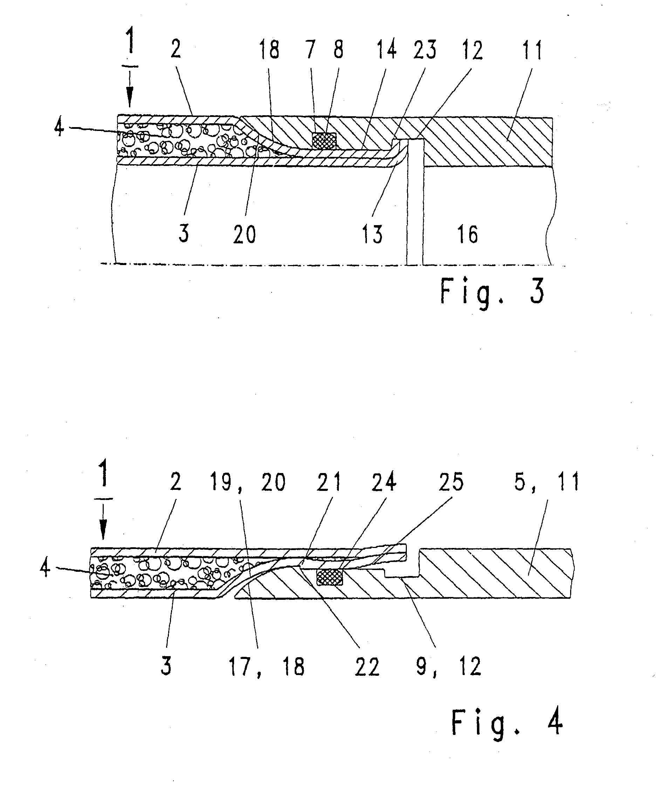

**Figur 3** zeigt eine zweite Ausführungsform der erfindungsgemäßen Rohrverbindung, wobei für gleiche Teile gleiche Bezugszeichen verwendet worden sind. Im Unterschied zur Ausführungsform gemäß **Figur 2** besteht die Rohrverbindung aus einem Außenfitting 11 mit einem darin eingeschobenen Sandwichrohr 1, wobei der Einschubbereich des Sandwichrohres 1 komplementär zum aufschubseitigen Endbereich des Außenfittings 11 ausgebildet ist. Der Aufbau und die Funktionsweise dieser Rohrverbindung entspricht dabei prinzipiell der Rohrverbindung gemäß erster Ausführungsform.

**Figur 4** zeigt eine Variante der Ausführungsformen gemäß **Figur 2 und 3** mit einer Rückziehsicherung. Dargestellt ist eine Montageposition, bei der die eigentliche axiale Sicherung noch nicht angebracht ist. Die Rückziehsicherung ist gekennzeichnet durch einen am Ende der einschub- oder aufschubseitigen Anschrägung 17, 18 des Fittings 5, 11 angeordneten radial nach innen oder außen verlaufenden Absatz 22. Komplementär dazu weist das Sandwichrohr 1 am Ende der ein- oder aufschubseitigen angenäherten Kontur 19, 20 einen Absatz 21 auf, an den sich ein zylindrisch ausgebildeter Abschnitt 24 anschließt.

Zur Vermeidung der Beschädigung des Dichtringes 8 beim Ein- oder Aufschieben des Sandwichrohres 1 schließt sich an den zylindrisch ausgebildeten Abschnitt 24 zum ein- oder aufschubseitigen Ende des Sandwichrohres 1 ein sich im Durchmesser verändernder Abschnitt 25 an, der als Ein- bzw. Aufschiebehilfe wirksam ist.

Im Falle eines Innenfittings weist dieser Abschnitt 25 im nicht montierten Zustand einen Innendurchmesser auf, der mindestens so groß ist wie der Außendurchmesser des Dichtringes 8 und im Falle eines Außenfittings einen Außendurchmesser der höchstens so groß ist wie der Innendurchmesser des Dichtringes 8.

Beim Ein- oder Aufschieben des Sandwichrohres 1 gleitet der Abschnitt 25 über den Dichtring 8, wobei der Absatz 22 des Fittings 5, 11 in den Absatz 21 des Sandwichrohres 1 einrastet und somit eine Rückziehsicherung bildet. Diese Rückziehsicherung verhindert ein Zurückgleiten des Sandwichrohres 1, bevor die eigentliche axiale Sicherung - Umbördeln des Endbereiches des Sandwichrohres 1 - angebracht ist. Durch den zylindrisch ausgebildeten Abschnitt 24 wird der Dichtring 8 beim Ein- oder Aufschieben komprimiert, so dass des Sandwichrohr 1 gegen den Fitting 5, 11 abgedichtet ist.

### Bezugszeichenliste

| **Nr.** | **Bezeichnung** |
|---|---|
| 1 | Sandwichrohr |
| 2 | metallisches Außenrohr |
| 3 | metallisches Innenrohr |
| 4 | Füllmittel |
| 5 | Innenfitting |
| 6 | zylindrisch ausgebildeter Abschnitt Innenfitting |
| 7 | Ausnehmung |
| 8 | Dichtelement |
| 9 | Nut Innenfitting |
| 10 | Kragen |
| 11 | Außenfitting |
| 12 | Nut Außenfitting |
| 13 | Kragen |
| 14 | zylindrisch ausgebildeter Abschnitt Außenfitting |
| 15 | zylindrisch ausgebildeter Abschnitt Innenfitting |
| 16 | zylindrisch ausgebildeter Abschnitt Außenfitting |
| 17 | Anschrägung Innenfitting |
| 18 | Anschrägung Außenfitting |
| 19 | angenäherte Kontur |
| 20 | angenäherte Kontur |
| 21 | Absatz Sandwichrohr |
| 22 | Absatz Außen- bzw. Innenfitting |
| 23 | Oberflächenstruktur |
| 24 | zylindrischer Abschnitt Sandwichrohr |
| 25 | Endabschnitt Sandwichrohr |

## Patentansprüche

1. Rohrverbindung, bestehend aus einem Fitting, in den ein Leitungsrohr ein- oder auf den ein Leitungsrohr aufschiebbar und axial sicherbar ist und der im Einschub- oder Aufschubbereich mit einem Dichtelement versehen ist
**dadurch gekennzeichnet,**
**dass** das Leitungsrohr ein Sandwichrohr (1) ist, dessen Innen- und
Außendurchmesser dem Innen- und Außendurchmesser des Fittings (5, 11) entsprechen und dessen Endbereich (19, 20) komplementär zur Kontur des Endbereichs (17, 18) des Fittings (5, 11) zum Ein- oder Aufschieben anpassbar ist.

2. Rohrverbindung nach Anspruch 1
**dadurch gekennzeichnet,**
**dass** das Sandwichrohr (1) aus einem dünnwandigen Außenrohr (2) und einem mit einem Füllmittel (4) stoffschlüssig damit verbundenen dünnwandigen Innenrohr (3) besteht.

3. Rohrverbindung nach Anspruch 2
**dadurch gekennzeichnet,**
**dass** das Außenrohr (2) und das Innenrohr (3) aus Metall oder Kunststoff besteht.

4. Rohrverbindung nach Anspruch 2 und 3
**dadurch gekennzeichnet,**
**dass** das Füllmittel (4) des Sandwichrohres (1) zusammenpressbar ist.

5. Rohrverbindung nach Anspruch 2 und 4
**dadurch gekennzeichnet,**
**dass** das Füllmedium (4) ein Metallschaum oder Polymerschaum ist.

6. Rohrverbindung nach Anspruch 5
**dadurch gekennzeichnet,**
**dass** der Polymerschaum ein Polyurethan ist.

7. Rohrverbindung nach einem der Ansprüche 1 - 6
**dadurch gekennzeichnet,**
**dass** der der Ein- oder Aufschubseite zugewandte Endbereich des Fittings (5, 11) eine Anschrägung (17, 18) aufweist und der an dieser Anschrägung (17, 18) zur Anlage kommende Endbereich (19, 20) des Sandwichrohres (1) dazu angenähert ist.

8. Rohrverbindung nach Anspruch 7
**dadurch gekennzeichnet,**
**dass** im montierten Zustand zwischen dem Endbereich (19) des Sandwichrohres (1) und der Anschrägung (17) des Fittings (5) ein sich radial nach innen vergrößernder Spalt verbleibt.

9. Rohrverbindung nach Anspruch 7
**dadurch gekennzeichnet,**
**dass** sich an die Anschrägung (17, 18) des Fittings (5, 11) in Einschiebe- bzw. Aufschubrichtung ein zylindrisch ausgebildeter Abschnitt (6, 14) anschließt.

10. Rohrverbindung nach Anspruch 7 und 9
**dadurch gekennzeichnet,**
**dass** der Fitting (5, 11) im Übergangsbereich zwischen Anschrägung (17, 18) und zylindrisch ausgebildetem Abschnitt (6, 14) eine das Dichtelement (8) aufnehmende Ausnehmung (7) aufweist.

11. Rohrverbindung nach Anspruch 1 und 10
**dadurch gekennzeichnet,**
**dass** das Dichtelement (8) ein Dichtring ist.

12. Rohrverbindung nach einem der Ansprüche 1 - 11
**dadurch gekennzeichnet,**
**dass** der Fitting (5, 11) am Ende der Erstreckung des zylindrisch ausgebildeten Abschnittes (6, 14) eine sich radial nach innen oder außen erstreckende und einen Anschlag bildende Nut (9, 12) aufweist.

13. Rohrverbindung nach Anspruch 12
**dadurch gekennzeichnet,**
**dass** die Nut (9, 12) als Ringnut ausgebildet ist.

14. Rohrverbindung nach Anspruch 12 und 13
**dadurch gekennzeichnet,**
**dass** sich an die Nut (9, 12) in Ein- bzw. Aufschubrichtung ein zweiter zylindrisch ausgebildeter Abschnitt (15, 16) anschließt, dessen Außendurchmesser dem Außendurchmesser des Sandwichrohres (1) oder dessen Innendurchmesser dem Innendurchmesser des Sandwichrohres (1) entspricht.

15. Rohrverbindung nach einem der Ansprüche 1 - 14
**dadurch gekennzeichnet,**
**dass** der Endbereich des Sandwichrohres (1) komplementär zum ersten zylindrisch ausgebildeten Abschnitt (6, 14) angepasst ist und nach dem Ein- oder Aufschieben das stirnseitige Ende des Sandwichrohres (1) kragenartig umgebogen ist, wobei der Kragen (10, 13) in die Nut (9, 12) des Fittings (5, 11) hineingreift.

16. Rohrverbindung nach Anspruch 12 und 13
**dadurch gekennzeichnet,**
**dass** die Nut (9, 12) ein- bzw. aufschubseitig mit einer zur Verklammerung des Kragens (10, 13) des Sandwichrohres (1) geeigneten Oberflächenstruktur (23) versehen ist.

17. Rohrverbindung nach Anspruch 16
**dadurch gekennzeichnet,**
**dass** die Oberflächenstruktur (23) zahnartig ausgebildet ist.

18. Rohrverbindung nach Anspruch 9 und 14
**dadurch gekennzeichnet,**
**dass** die Differenz der radialen Erstreckung des ersten zylindrisch ausgebildeten Abschnittes (6, 14) und des zweiten zylindrisch ausgebildeten Abschnittes (15, 16) der angepassten radialen Erstreckung des Sandwichrohres (1) im ersten zylindrisch ausgebildeten Abschnitt (6, 14) entspricht.

19. Rohrverbindung nach Anspruch 1
**dadurch gekennzeichnet,**
**dass** das Sandwichrohr (1) im Einschub- oder Aufschubbereich einen sich radial nach innen oder außen erstreckenden Absatz (21) aufweist, der mit einem im Fitting (5, 11) komplementär ausgebildeten Absatz (22) nach dem Ein- oder Aufschieben eine Rückziehsicherung bildet, kurz bevor die Stirnseite des Sandwichrohres an der den Anschlag bildenden Nut (9, 12) zur Anlage kommt.

20. Rohrverbindung nach Anspruch 19
**dadurch gekennzeichnet,**
**dass** sich an den Absatz (21) des Sandwichrohres (1) ein zylindrisch ausgebildeter Abschnitt (24) anschließt, dessen Außen- oder Innendurchmesser dem zylindrisch ausgebildeten Abschnitt (6, 14) des Fittings (5, 11) entspricht.

21. Rohrverbindung nach Anspruch 19 und 20
**dadurch gekennzeichnet,**
**dass** sich an den zylindrisch ausgebildeten Abschnitt (24) zum ein- oder aufschubseitigen Ende des Sandwichrohres (1) ein sich im Durchmesser verändernder Abschnitt (25) anschließt, dessen Innendurchmesser im nicht montierten Zustand im Falle eines Innenfittings mindestens so groß ist wie der Außendurchmesser des Dichtringes (8) und dessen Außendurchmesser im Fall eines Außenfittings höchstens so groß ist wie der Innendurchmesser des Dichtringes (8).
